# FASCICULE DE BREVET EUROPEEN

(11) **EP 0 677 881 B1**
(45) Date de publication et mention de la délivrance du brevet: **25.03.1998**
(21) Numéro de dépôt: 95400803.3
(22) Date de dépôt: 10.04.1995
(51) Int. Cl.: H01M 4/38

(54) **Matériau hydrurable pour électrode négative d'accumulateur nickel-métal hydrure**
Wasserstoffaufnehmender Werkstoff für negative Elektroden von nickel-hydrid Akkumulatoren
Hydridable material for nickel-hydride accumulator negative electrode

(30) Priorité: 15.04.1994 FR 9404555
(43) Date de publication de la demande: 18.10.1995
(73) Titulaire: ALCATEL ALSTHOM COMPAGNIE GENERALE D'ELECTRICITE, 75382 Paris Cédex 08 (FR)
(72) Inventeur: Knosp, Bernard, F-92200 Neuilly-sur-Seine (FR); Mimoun, Michel, F-93330 Neuilly-sur-Marne (FR); Bouet, Jacques, F-75015 Paris (FR); Gicquel, Daniel, F-91290 Lanorville (FR); Jordy, Christian, F-91410 Dourdan (FR)
(74) Mandataire: Laroche, Danièle

(56) Documents cités:
- EP-A- 0 484 964
- EP-A- 0 552 790
- EP-A- 0 587 503
- FR-A- 2 623 271
- FR-A- 2 628 121

## Description

La présente invention concerne un matériau hydrurable pour électrode négative d'accumulateur nickel-metal hydrure. Elle s'étend en outre à l'utilisation de ce matériau dans une électrode négative d'accumulateur nickel-metal hydrure.

Les accumulateurs nickel-metal hydrure étanches sont des accumulateurs alcalins à électrolyte aqueux; le réactif constitué par l'hydrogène est stocké dans la masse de l'alliage hydrurable qui a la faculté de pouvoir en absorber de grandes quantités. Cet alliage doit pouvoir emmagasiner et restituer l'hydrogène, selon que l'accumulateur est en charge ou en décharge, avec une vitesse suffisante dans les conditions normales de fonctionnement. Il doit également avoir une capacité électrochimique élevée, résister à la corrosion dans la potasse et ne pas être toxique.

De nombreux travaux ont été effectués sur des composés intermétalliques de type AB₂ appelés "phases de LAVES". Ces phases se classent suivant trois structures cristallines: cubique C15 (type MgCu₂), hexagonale C14 (MgZn₂), et hexagonale C36 (MgNi₂), cette dernière symétrie étant peu courante. Ces phases peuvent être obtenues à partir des systèmes ZrCr₂, ZrV₂, et des systèmes TiMnₓ, HfMnₓ, ZrMnₓ, avec x compris entre 1,5 et 2,5. Mais l'industrialisation de ces matériaux présente des difficultés liées aux problèmes d'oxydabilité aigüe à l'air, de corrosion dans l'électrolyte et de passivation lors de leur utilisation en électrode.

La demande de brevet européen EP-0 587 503 décrit une famille de matériaux hydrurables comportant une phase majoritaire de structure C14 de formule générale:

(Zr₁₋ₐ Aₐ ) ( Ni_{1-(b+c+d+e)} Mn_{b} Al_{c} Co_{d} Mₑ )ₜ

avec
0 ≤ a ≤0,3 0 <b ≤0,6
1,9 ≤ t ≤2,1 0 < c ≤0,4
b+c+d+e ≤0,8 0 <d ≤0,4
0 ≤e ≤0,6
où A représente au moins un élément parmi Ti, Y, Ce, Ca, Mg, et M est choisi parmi Cr et Si.

Bien que de capacité relativement élevée, la plupart de ces matériaux ont des difficultés à se charger et à se décharger dans des conditions de régime rapide avec un niveau de performances satisfaisant. De plus les matériaux multiphasés sont vulnérables à la corrosion, due à un phénomène de micro-piles locales, ce qui entraine une baisse des performances en cyclage.

La présente invention concerne en particulier un matériau hydrurable pour électrode capable de se charger et de se décharger de manière satisfaisante en régime rapide.

L'objet de la présente invention est un matériau hydrurable pour électrode négative d'accumulateur nickel-metal hydrure de structure "phase de LAVES" de type hexagonal C14 (MgZn₂), caractérisé en ce qu'il est monophasé de formule générale:

Zr₁₋ₓ Tiₓ Niₐ Mn_{b} Al_{c} Co_{d} Vₑ

avec:
0,036 ≤ x ≤ 0,456 0,7 ≤ a ≤ 0,9
0,8 ≤ a+e ≤ 1,2 0,7 ≤ b ≤ 0,9
0,8 ≤ b+c+d ≤ 1,2 0 ≤ c ≤ 0,2
1,9 ≤ a+b+c+d+e ≤ 2,1 0,1 ≤ d ≤ 0,2
0,05 ≤ e ≤ 0,3

De telle sorte que cet alliage correspond à un rapport Mn/Ni compris entre 0,77 et 1,29.

Le matériau selon la présente invention est capable en une heure soit de se recharger à 75% avant que le dégagement d'hydrogène commence, soit de restituer plus de 90% de sa capacité massique mesurée en régime normal (décharge en 5 heures). En décharge à régime très rapide, on peut obtenir en 30 minutes plus de 75% de la capacité mesurée en régime normal.

Le matériau selon l'invention atteint sa capacité en trois cycles et conserve ses performances pratiquement stables pendant toute sa durée d'utilisation. Ceci présente un grand avantage pour l'utilisateur qui obtient rapidement la performance maximum du générateur dont il profite durant toute la période de service prévue.

Selon une première forme d'exécution, le matériau a pour formule: Zr_{0,82} Ti_{0,18} Ni_{0,8} Mn_{0,8} Co_{0,15} V_{0,25}.

Selon une deuxième forme d'exécution, le matériau a pour formule: Zr_{0,8} Ti_{0,2} Ni_{0,8} Mn_{0,8} Al_{0,05} Co_{0,15} V_{0,2}.

Selon une troisième forme d'exécution, le matériau a pour formule: Zr_{0,75} Ti_{0,25} Ni_{0,8} Mn_{0,8} Al_{0,15} Co_{0,15} V_{0,1}.

La présente invention a également pour objet une électrode négative d'accumulateur nickel-metal hydrure comportant un matériau hydrurable qui est réalisée à partir d'un mélange composé du matériau hydrurable en poudre, de 0,1 à 70% d'une poudre conductrice et de 0,05 à 5% de liant organique, fixé sur un support conducteur. On pourrait bien entendu utiliser de la même façon une électrode comportant un collecteur de courant et dans laquelle la cohésion de l'alliage hydrurable est obtenue par frittage thermique. Le collecteur de courant peut être par exemple un feuillard perforé, une grille, un déployé, un feutre, une mousse. L'ajout d'additifs, par exemple d'un liant organique, facilitant la fixation de l'alliage sur le collecteur, son frittage ou son fonctionnement électrochimique peuvent également être envisagés.

Le matériau de l'invention se prête à de nombreuses applications du fait de ses propriétés de chargeabilité et déchargeabilité en régime rapide, ainsi il est particulièrement adapté aux domaines du transport et du matériel portable.

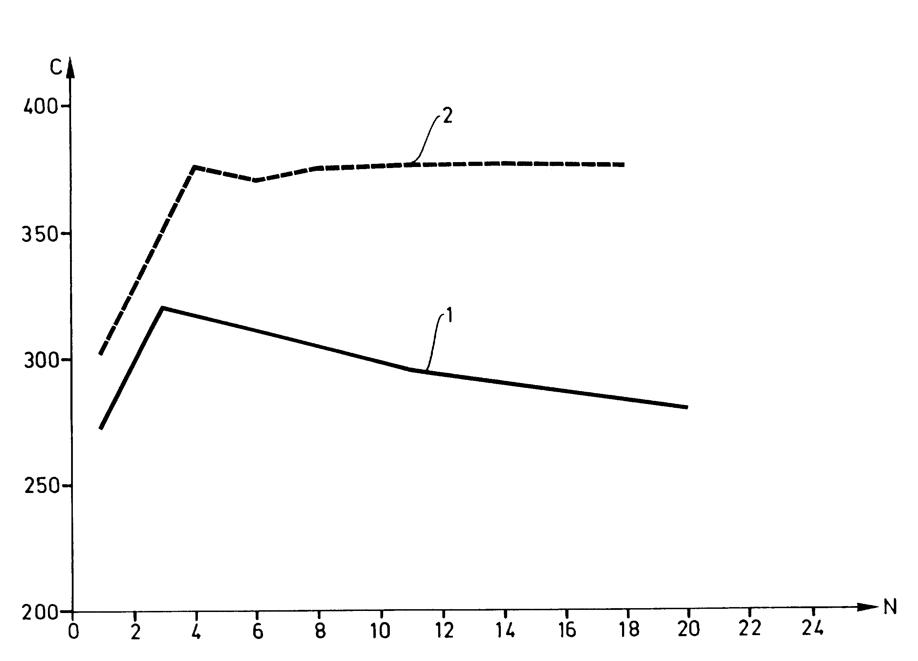

D'autres caractéristiques et avantages de la présente invention apparaitront à la lecture des exemples suivants de modes de réalisation, donnés bien entendu à titre illustratif mais nullement limitatif, et dans le dessin annexé sur lequel la figure unique représente la capacité déchargée au cours du cyclage d'une électrode comportant l'alliage Zr_{0,7} Ti_{0,3} Ni_{0,8} Mn_{0,8} Al_{0,25} Co_{0,15} selon l'art antérieur et la capacité déchargée au cours du cyclage d'une électrode comportant l'alliage selon la présente invention de composition Zr_{0,8} Ti_{0,2} Ni_{0,8} Mn_{0,8} Al_{0,05} Co_{0,15} V_{0,2}. En ordonnée C représente la capacité en mAh/g d'alliage hydrurable et en abscisse N est le nombre de cycles effectués.

### EXEMPLE 1 Art antérieur

Un alliage selon l'art antérieur de composition Zr_{0,7} Ti_{0,3} Ni_{0,8} Mn_{0,8} Al_{0,25} Co_{0,15} est élaboré à partir d'un mélange réalisé avec des métaux de grande pureté (99,5% à 99,999%), puis ce mélange est homogénéisé par plusieurs fusions successives dans un four à induction équipé d'un creuset en cuivre, refroidi par eau, sous pression partielle d'argon.

L'analyse radiocristallographique effectuée sur l'alliage obtenu, réduit en poudre par broyage mécanique sous argon, montre que cet alliage biphasé est constitué majoritairement d'une "phase de LAVES" hexagonale de structure C14 (MgZn₂) et de paramètres de maille a=0,4984nm et c=0,8117nm, et de moins de 5% d'une autre phase.

On réalise alors une électrode dont la matière active se compose de 25% de l'alliage hydrurable fabriqué ci-dessus réduit en poudre par des cycles successifs d'hydruration/déshydruration, de 70% d'une poudre de nickel et de 5% d'un liant organique à base de PTFE. La matière active est supportée par un collecteur de courant en déployé de nickel. L'électrode une fois constituée est comprimée sous une pression de 10 tonnes/cm². Cette électrode est ensuite préchargée à 80mAh et subit une traitement thermique d'activation de 3h à 70°C.

Cette électrode est assemblée dans un générateur ouvert face à une électrode positive qui est une électrode d'hydroxyde de nickel analogue à celle utilisée dans les accumulateurs nickel-cadmium classiques. L'électrolyte est de la potasse KOH 8,7N; il est introduit en excès.

Pour l'évaluation électrochimique de cette électrode, un test est réalisé dans les conditions suivantes:
* charge à un courant de 40mA par gramme d'alliage hydrurable pendant 16 heures,
* décharge à 80mA/g jusqu'à une tension d'arrêt de 0,95 Volt.

La courbe 1 de la figure unique représente le cyclage dans ces conditions de l'électrode réalisée précédemment. Après trois cycles, la capacité massique maximum restituée lors de la décharge principale est de 320mAh par gramme d'alliage hydrurable. Elle décroît régulièrement jusqu'au cycle 20.

Lors d'une décharge à un courant de 400mA/g le matériau restitue une capacité massique de 260mAh/g, soit 81% de sa capacité en régime normal.

Lors d'une décharge à un courant de 800mA/g le matériau restitue une capacité massique de 122mAh/g, soit 38% de sa capacité en régime normal.

Une électrode analogue à celle réalisée ci-dessus est assemblée dans un générateur étanche sous argon équipé d'un capteur de pression, et trois cycles sont effectués dans les conditions de charge et de décharge données précédemment.

Après la décharge du troisième cycle le générateur est rechargé à un courant de 400mA/g. Le dégagement d'hydrogène détecté par la montée de la pression dans le générateur débute après avoir chargé une capacité massique de 207mAh/g.

### EXEMPLE 2

Une électrode est fabriquée comme dans l'exemple 1 mais en utilisant l'alliage selon l'invention Zr_{0,8} Ti_{0,2} Ni_{0,8} Mn_{0,8} Al_{0,05} Co_{0,15} V_{0,2} qui est élaboré à partir d'un mélange réalisé avec des métaux de grande pureté (99,5% à 99,999%), puis ce mélange est homogénéisé par plusieurs fusions successives dans un four à induction équipé d'un creuset en cuivre, refroidi par eau, sous pression partielle d'argon. Après la dernière fusion, l'alliage a subi un recuit sous vide d'au moins 24 heures à 1100°C.

L'analyse radiocristallographique montre que cet alliage monophasé est constitué d'une "phase de LAVES" de structure C14 dont les paramètres de maille sont a=0,4992nm et c=0,8139nm.

Cette électrode est alors évaluée dans les conditions décrites dans l'exemple 1.

La courbe 2 de la figure unique montre qu'une capacité massique de 376mAh/g d'alliage est atteinte en trois cycles au cours de la décharge en régime normal. Elle reste stable pendant 18 cycles.

Lors d'une décharge à un courant de 400mA/g le matériau restitue une capacité massique de 347mAh/g soit 92% de sa capacité en régime normal.

Lors d'une décharge à un courant de 800mA/g le matériau restitue une capacité massique de 296mAh/g soit 79% de sa capacité en régime normal.

Une électrode analogue à celle réalisée ci-dessus est assemblée dans un générateur étanche sous argon équipé d'un capteur de pression, et trois cycles sont effectués dans les conditions de charge et de décharge données dans l'exemple 1.

Après le troisième cycle le générateur est rechargé à un courant de 400mA/g. Le dégagement d'hydrogène détecté par la montée de la pression dans le générateur débute après avoir chargé une capacité massique de 281mAh/g, ce qui représente une amélioration de plus de 35% par rapport à l'art antérieur.

### EXEMPLE 3

Une électrode est fabriquée comme dans l'exemple 1 mais en utilisant l'alliage selon l'invention Zr_{0,82} Ti_{0,18} Ni_{0,8} Mn_{0,8} Co_{0,15} V_{0,25} qui est élaboré de la même manière que dans l'exemple 2.

L'analyse radiocristallographique montre que cet alliage monophasé est constitué d'une "phase de LAVES" de structure C14 dont les paramètres de maille sont a=0,4994nm et c=0,8146nm.

Cette électrode est alors évaluée dans les conditions décrites dans l'exemple 1.

La décharge en régime normal (80mA/g) restitue dès le troisième cycle une capacité massique de 361mAh/g d'alliage.

Lors d'une décharge à un courant de 400mA/g, le matériau restitue une capacité massique de 321mAh/g soit 89% de sa capacité en régime normal.

Lors d'une décharge à un courant de 800mA/g, le matériau restitue une capacité massique de 303mAh/g soit 84% de sa capacité en régime normal.

Bien entendu, les diverses applications numériques fournies ne le sont qu'à titre d'exemples non limitatifs. La présente invention n'est pas limitée aux modes de réalisation décrits, mais elle est susceptible de nombreuses variantes accessibles à l'homme de l'art sans que l'on ne s'écarte de l'esprit de l'invention. En particulier, on pourra sans sortir du cadre de l'invention faire varier les compositions dans les fourchettes indiquées.

## Revendications

1. Matériau hydrurable pour électrode négative d'accumulateur nickel-metal hydrure de structure "phase de LAVES" de type hexagonal C14 (MgZn₂), caractérisé en ce qu'il est monophasé de formule générale:
Zr₁₋ₓ Tiₓ Niₐ Mn_{b} Al_{c} Co_{d} Vₑ
avec:
0,036 ≤ x ≤ 0,456 0,7 ≤ a ≤ 0,9
0,8 ≤ a+e ≤ 1,2 0,7 ≤ b ≤ 0,9
0,8 ≤ b+c+d ≤ 1,2 0 ≤ c ≤ 0,2
1,9 ≤ a+b+c+d+e ≤ 2,1 0,1 ≤ d ≤ 0,2
0,05 ≤ e ≤ 0,3

2. Matériau selon la revendication 1, de formule:
Zr_{0,82} Ti_{0,18} Ni_{0,8} Mn_{0,8} Co_{0,15} V_{0,25}

3. Matériau selon la revendication 1, de formule:
Zr_{0,8} Ti_{0,2} Ni_{0,8} Mn_{0,8} Al_{0,05} Co_{0,15} V_{0,2}

4. Electrode négative d'accumulateur nickel-metal hydrure comportant un matériau hydrurable selon l'une des revendications précédentes caractérisée en ce qu'elle est réalisée à partir d'un mélange composé dudit matériau hydrurable en poudre, de 0,1 à 70% d'une poudre conductrice et de 0,05 à 5% de liant organique, fixé sur un support conducteur.

## Patentansprüche

1. Wasserstoffaufnehmendes Material für die negative Elektrode eines Nickel-Metallhydrid-Akkumulators der Struktur "LAVES-Phase" vom Typ hexagonal C14 (MgZn₂), dadurch gekennzeichnet, daß es einphasig ist und der allgemeinen Formel
Zr₁₋ₓ Tiₓ Niₐ Mn_{b} Al_{c} Co_{d} Vₑ
entspricht, wobei:
0,036 ≤ x ≤ 0,456 0,7 ≤ a ≤ 0,9
0,8 ≤ a+e ≤ 1,2 0,7 ≤ b ≤ 0,9
0,8 ≤ b+c+d ≤ 1,2 0 ≤ c ≤ 0,2
1,9 ≤ a+b+c+d+e ≤ 2,1 0,1 ≤ d ≤ 0,2
0,05 ≤ e ≤ 0,3

2. Material nach Anspruch 1 der Formel
Zr_{0,82} Ti_{0,18} Ni_{0,8} Mn_{0,8} Co_{0,15} V_{0,25}

3. Material nach Anspruch 1 der Formel
Zr_{0,8} Ti_{0,2} Ni_{0,8} Mn_{0,8} Al_{0,05} Co_{0,15} V_{0,2}

4. Negative Elektrode eines Nickel-Metallhydrid-Akkumulators, die ein wasserstoffaufnehmendes Material nach einem der vorhergehenden Ansprüche enthält, dadurch gekennzeichnet, daß sie ausgehend von einer Mischung des genannten wasserstoffaufnehmenden Materials in Pulverform mit 0,01 bis 70 % eines leitfähigen Pulvers und 0,05 bis 5 % organischem Bindemittel, die auf einem leitfähigen Träger fixiert ist, hergestellt ist.

## Claims

1. A hydridable material for the negative electrode of a nickel-metal hydride storage battery with a "Lavé's phase" structure of hexagonal C14 type (MgZn₂), characterised in that it is a monophase with general formula:
Zr₁₋ₓ Tiₓ Niₐ Mn_{b} Al_{c} Co_{d} Vₑ
where:
0.036 ≤ x ≤ 0.456 0.7 ≤ a ≤ 0.9
0.8 ≤ a+e ≤ 1.2 0.7 ≤ b ≤ 0.9
0.8 ≤ b+c+d ≤ 1.2 0 ≤ c ≤ 0.2
1.9 ≤ a+b+c+d+e ≤ 2.1 0.1 ≤ d ≤ 0.2
0.05 ≤ e ≤ 0.3

2. A material according to claim 1 with formula
Zr_{0.82} Ti_{0.18} Ni_{0.8} Mn_{0.8} Co_{0.15} V_{0.25}.

3. A material according to claim 1 with formula
Zr_{0.8} Ti_{0.2} Ni_{0.8} Mn_{0.8} Al_{0.05} Co_{0.15} V_{0.2}.

4. A negative electrode for a nickel-metal hydride storage battery comprising a hydridable material according to any one of the preceding claims characterised in that it is formed from a mixture composed of said hydridable material in powder form, 0.1% to 70% of a conductive powder and 0.05% to 5% of an organic binder fixed on a conductive support.
